# EUROPEAN PATENT APPLICATION

(11) **EP 4 332 715 A1**
(43) Date of publication of application: **06.03.2024**
(21) Application number: 22798525.6
(22) Date of filing: 08.03.2022
(51) Int. Cl.: G05D 1/02, G01C 21/20

(54) **OBSTACLE AVOIDANCE METHOD AND APPARATUS FOR SELF-WALKING DEVICE, AND MEDIUM AND ELECTRONIC DEVICE**

(30) Priority: 06.05.2021 CN 202110490102
(71) Applicant: Beijing Roborock Technology Co., Ltd., Beijing 102206 (CN)
(72) Inventor: ZHANG, Lei, Beijing 102206 (CN)
(74) Representative: Manitz Finsterwald Patent- und Rechtsanwaltspartnerschaft mbB
(86) International application number: PCT/CN2022/079790
(87) International publication number: WO 2022/233183

(57) **Abstract**

An obstacle avoidance method and apparatus for a self-walking device, and a medium and an electronic device. Current feature information and historical feature information which have spatial significance are analyzed by using spatial information of a machine body, and a new travel route is re-planned. A travel route suitable for a self-walking device to walk is obtained via assessment by means of spatial information, thereby avoiding the limitation of planning the travel route by relying solely on distance values with respect to obstacles that are measured at the same height, and thus improving the effectiveness of route planning.

## Description

### CROSS-REFERENCE TO RELATED APPLICATION

This application claims priority of the Chinese Patent Application No. 202110490102.6, filed on May 6, 2021, which is incorporated herein by reference in its entirety as a part of this application.

### TECHNICAL FIELD

The present disclosure relates to the field of robot technologies, and more particularly to an obstacle avoidance method and apparatus for a self-walking device, a medium, and an electronic device.

### BACKGROUND

With the development of technologies, various smart robots have emerged, such as sweeping machines, mopping machines, vacuum cleaners, and weeders. These robots can automatically identify the cleaning route, and select a cleaning mode according to the cleaning route, which saves labor and labor cost.

However, local shapes of most robots are unregular. For example, laser distance sensors (LDSs) are arranged at the top of some cleaning machines and protrude from the top cover plane of the cleaning machine. During a walking process, when encountering a short obstacle (such as the bottom of a sofa and the bottom of a piece of European style furniture) with unregular heights, the cleaning machine may be trapped at the short position of the obstacle.

It should be noted that the information disclosed at the Background part is only used to facilitate understanding the background of the present disclosure, and may contain information that does not constitute prior art known by those skilled in the art.

### SUMMARY

An objective of the present disclosure is to provide an obstacle avoidance method and apparatus for a self-walking device, a medium, and an electronic device, which can solve at least one of the above problems. The specific solutions are as below.

According to a first aspect of a specific embodiment of the present disclosure, an obstacle avoidance method for a self-walking device is provided. The method includes:
acquiring a collision signal at a top of a self-walking device when the self-walking device walks along a current travel route;
acquiring current feature information of a surrounding obstacle in response to the collision signal, the current feature information including suspension height information of a suspending obstacle over the top of the self-walking device;
acquiring historical feature information of a region in which a current position is located; and
re-planning a travel route to avoid the suspending obstacle based on the current feature information, the historical feature information, and preset feature information of a machine body profile.

Optionally, the acquiring the current feature information of the surrounding obstacle includes:
acquiring the current feature information of the surrounding obstacle by a structured light assembly arranged on the self-walking device.

Optionally, the feature information of the machine body profile includes size information of the machine body profile; and
the re-planning the travel route based on the current feature information, the historical feature information, and the preset feature information of the machine body profile includes:
generating the newest feature information by updating the historical feature information based on the current feature information; and
re-planning the travel route based on the newest feature information and the size information.

Optionally, the feature information includes a correspondence relationship between suspension position information and suspension height information; and
the generating the newest feature information by updating the historical feature information based on the current feature information includes:
updating historical suspension height information corresponding to the suspension position information based on current suspension height information.

Optionally, the historical height information includes historical elevation map information;
the historical elevation map information includes information of multiple adjacent unit regions and historical elevation information corresponding to the information of each unit region, where the information of each unit region is associated with the suspension position information, and the information of all the unit regions constitute information of a plane region associated with preset task information; and
the updating the historical suspension height information corresponding to the suspension position information based on the current suspension height information includes:
performing a classification operation based on the information of unit regions to acquire suspension position information of a respective category;
determining first suspension height information of the respective category based on the current suspension height information corresponding to the suspension position information of each category; and
updating the historical suspension height information for the information of unit regions of the respective category based on the first suspension height information of each category.

Optionally, the determining the first suspension height information of the respective category based on the current suspension height information corresponding to the suspension position information of each category includes:
acquiring first suspension height information of the respective category with the minimum value based on the current suspension height information corresponding to suspension position information of each category.

Optionally, after acquiring the current feature information of the surrounding obstacle, the method further includes:
marking current feature information of a detected obstacle.

According to a second aspect of a specific embodiment of the present disclosure, an obstacle avoidance apparatus for a self-walking device is provided. The apparatus includes:
a signal acquisition unit, configured to acquire a collision signal at a top of a self-walking device when the self-walking device walks along a current travel route;
a response unit, configured to acquire current feature information of a surrounding obstacle in response to the collision signal, the current feature information including suspension height information of a suspending obstacle over the top of the self-walking device;
a feature acquisition unit, configured to acquire historical feature information of a region in which a current position is located; and
a planning unit, configured to re-plan a travel route to avoid the suspending obstacle based on the current feature information, the historical feature information, and preset feature information of a machine body profile.

Optionally, the response unit includes:
a response sub-unit, configured to acquire the current feature information of the surrounding obstacle by a structured light assembly arranged on the self-walking device.

Optionally, the feature information of the machine body profile includes size information of the machine body profile; and
the planning unit includes:
a generation sub-unit, configured to generate the newest feature information by updating the historical feature information based on the current feature information; and
a planning sub-unit, configured to re-plan the travel route based on the newest feature information and the size information.

Optionally, the feature information includes a correspondence relationship between suspension position information and suspension height information; and
the generation sub-unit includes:
a first updating sub-unit, configured to update historical suspension height information corresponding to the suspension position information based on current suspension height information.

Optionally, the historical height information includes historical elevation map information;
the historical elevation map information includes information of multiple adjacent unit regions and historical elevation information corresponding to the information of each unit region, where the information of each unit region is associated with the suspension position information, and the information of all the unit regions constitute information of a plane region associated with preset task information; and
the first updating sub-unit includes:
   a position acquisition sub-unit, configured to perform a classification operation based on the information of unit regions to acquire suspension position information of a respective category;
   a first height acquisition sub-unit, configured to determine first suspension height information of the respective category based on the current suspension height information corresponding to the suspension position information of each category; and
   a second updating sub-unit, configured to update the historical suspension height information for the information of unit regions of the respective category based on the first suspension height information of each category.

Optionally, the height acquisition sub-unit includes:
a second height acquisition sub-unit, configured to acquire first suspension height information of a respective category with the minimum value based on the current suspension height information corresponding to suspension position information of each category.

Optionally, the apparatus further includes:
a marking unit, configured to mark current feature information of a detected suspending obstacle after acquiring the current feature information of the surrounding obstacle.

According to a third aspect of a specific embodiment of the present disclosure, a computer-readable storage medium storing a computer program thereon is provided. When the program is executed by a processor, any one of the above obstacle avoidance methods of a self-walking device is accomplished.

According to a fourth aspect of a specific embodiment of the present disclosure, an electronic device is provided. The electronic device includes one or more processors and a storage apparatus for storing one or more programs. When the one or more programs is/are executed by the one or more processors, any one of the above obstacle avoidance methods of a self-walking device is accomplished by the one or more processors.

The above solutions according to embodiments of the present disclosure at least have the following advantageous effects.

The present disclosure provides an obstacle avoidance method and apparatus for a self-walking device, a medium, and an electronic device. In the present disclosure, current feature information and historical feature information which have spatial meanings are analyzed by using spatial information of the machine body, and a new travel route is re-planned. A travel route suitable for the self-walking device is acquired after evaluation based on the spatial information. Limitations of the travel route planning which solely depends on a distance from the obstacle detected at the same height are avoided, and the route planning effectiveness is improved.

### BRIEF DESCRIPTION OF THE DRAWINGS

Fig. 1 shows flow chart of an obstacle avoidance method for a self-walking device according to an embodiment of the present disclosure;
Fig. 2 shows an LDS arranged at the top of a sweeping machine according to an embodiment of the present disclosure;
Fig. 3 shows a linearly structured light assembly according to an embodiment of the present disclosure;
Fig. 4 shows a block diagram of an obstacle avoidance apparatus for a self-walking device according to an embodiment of the present disclosure; and
Fig. 5 shows a diagram of a connection structure of an electronic device according to an embodiment of the present disclosure.

### Reference signs

21, LDS; 22, top platform of sweeping machine;
31, linearly structured light sensor; 32-camera.

### DETAILED DESCRIPTION

To make the objects, technical solutions and advantages of the present disclosure clearer, the present disclosure will be further described in detail below with reference to the accompanying drawings. It is noted that the described embodiments are only part, but not all the embodiments of the present disclosure. All other embodiments obtained by those of ordinary skill in the art without creative efforts based on the embodiments in the present disclosure are falling within the protection scope of the present disclosure.

The terms used in the embodiments of the present disclosure are for the purpose of describing particular embodiments only, and are not intended to limit the present disclosure. The singular forms "a/an", "said", and "the" used in the embodiments of the present disclosure and the appended claims are intended to include the plural forms as well, unless the context clearly indicates otherwise. The term "a plurality of" generally means at least two.

It should be understood that the term "and/or" used herein merely describes an association relationship between associated objects, and indicates that there may be three relationships. For example, A and/or B may indicate three cases: A exists separately, A and B exist at the same time, and B exists separately. In addition, the character "/" herein generally indicates an "or" relationship between the contextual objects.

It should be understood that although the terms first, second, third, etc. may be used to describe the embodiments of the present disclosure, such descriptions should not be limited to these terms. These terms are only used to distinguish one from the other. For example, the first may also be referred to as the second without departing from the scope of the embodiments of the present disclosure. Similarly, the second may also be referred to as the first.

Depending on the context, the word "if" as used herein may be interpreted as "when" or "in response to determining" or "in response to detecting". Similarly, depending on the context, the phrases "if it is determined that" or "if it is detected that (the stated condition or event)" may be interpreted as "when it is determined that" or "in response to determining that" or "when it is detected that (the stated condition or event)" or "in response to detecting that (the stated condition or event)".

It should also be noted that the terms "includes," "contains," or any other variants thereof are intended to cover the non-exclusive inclusion, such that the commodities or devices including a series of elements not only include those elements, but also include other unclearly listed elements, or also include the inherent elements of such commodities or devices. Without more limitations, the element defined by the phrase "including a ..." does not exclude the existence of other same elements in the commodity or device that including such element.

The followings describe optional embodiments of the present disclosure with reference to the drawings.

An embodiment of the present disclosure provides a possible application scene including a self-walking device, such as a sweeping machine, a mopping machine, a vacuum cleaner, and a weeder. In some embodiments, a domestic sweeping machine is taken as an example. During the working process of the sweeping machine, the sweeping machine cleans the floor in a home according to a previously planned travel route, and inevitably encounters suspending obstacles, such as the bottom of a sofa and the bottom of a piece of European style furniture. The sweeping machine may be able to pass the suspending obstacle or may not be able to do so. As an LDS 21 arranged on the top of the sweeping machine can only detect the distance from obstacles at the same height, and cannot detect the heights of surrounding obstacles, the detection has many limitations, and suspending obstacles cannot be effectively identified. In view of such problems, the embodiment of the present disclosure provides an obstacle avoidance method. When the self-walking device acquires a collision signal at a top thereof during walking on a current travel route, it re-plans a travel route based on the feature information (including height information) of the surrounding obstacle, which enables the self-walking device to avoid suspending obstacles.

### Embodiment 1

An embodiment of the present disclosure provides an obstacle avoidance method for a self-walking device.

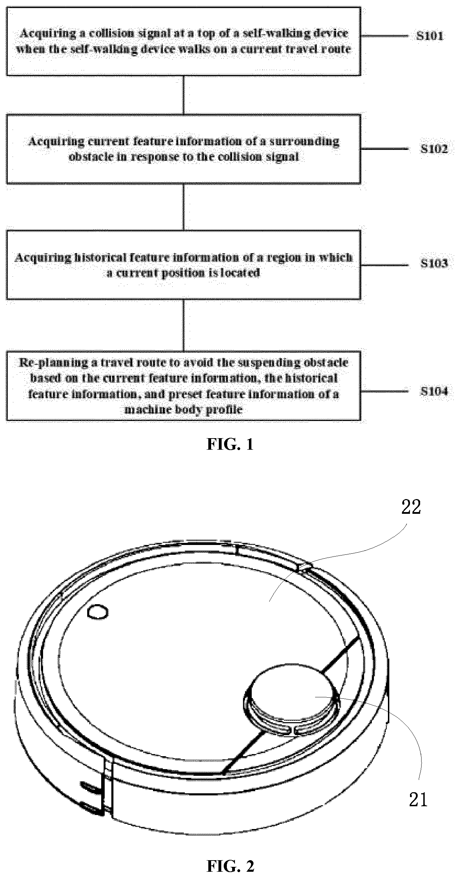

The embodiment of the present disclosure will be described in detail with reference to the Fig. 1.

In step S101, a collision signal at a top of a self-walking device is acquired when the self-walking device walks along a current travel route.

The current travel route may be understood as a preset route or an automatically planned route. As the artificial intelligence level of existing self-walking devices is becoming increasingly higher, self-walking devices can plan their travel routes required for completing tasks in advance based on historical route information. Take a sweeping machine as an example. The current travel route is a travel route required for cleaning the room. As shown in Fig. 2, as the LDS 21 arranged at the top of the sweeping machine is higher than the top platform 22 of the sweeping machine, the LDS 21 can easily collide with a suspending obstacle, thereby affecting the walking of the sweeping machine along the current travel route. Thus, a collision sensor is arranged at the top of the LDS 21 for detecting a collision signal between the suspending obstacle and the top of the LDS 21. Similarly, collision sensors may be arranged at tops of other self-walking devices, which will not be elaborated herein.

In step S102, current feature information of a surrounding obstacle is acquired in response to the collision signal.

The current feature information includes suspension height information of a suspending obstacle over the top of the self-walking device.

The current feature information further includes height information of surrounding obstacles on the ground when the self-walking device is walking.

A vertical distance from the ground on which the self-walking device is walking to the suspending obstacle can be acquired from the suspension height information and height information of the obstacle on the ground. As no obstacle exists within this vertical distance, a space is formed, and a height of this space can be acquired. For example, an off-the-ground space exists under the bottom of a four-legged sofa, and the vertical distance from this bottom to the ground is the height of this space.

That is, the feature information mentioned in the embodiment of the present disclosure includes height information with a space meaning, so that suspending obstacles can be identified effectively, and the passability of the self-walking device in a space can be determined.

In a specific embodiment, the acquiring the current feature information of the surrounding obstacle includes the following steps.

In step S 102-1, the current feature information of the surrounding obstacle is acquired by a structured light assembly arranged on the self-walking device.

The structured light assembly may include a light sensor and a camera 32. The light sensor illuminates a projected light beam onto the obstacle. Three-dimensional spatial information of the obstacle ahead is generated by analyzing the reflected light image captured by the camera 32, so that the height information of the obstacle can be acquired. The light sensor includes a dot-structured light sensor, a linearly structured light sensor 31, and a surface-structured light sensor.

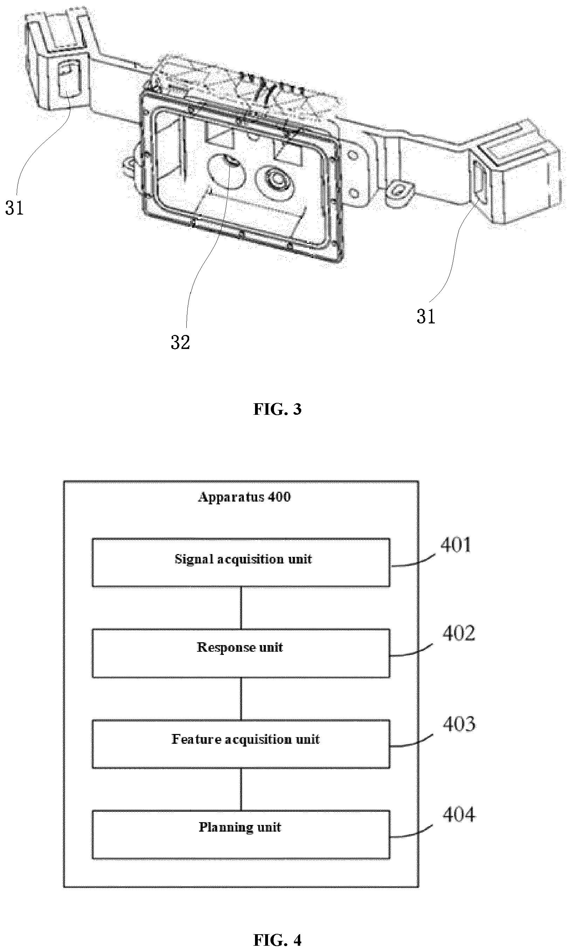

Optionally, as shown in Fig. 3, the linearly structured light assembly at least includes two linearly structured light sensors 31, which are arranged at outer sides of the self-walking device and at horizontal positions at two sides of the camera 32 respectively, for emitting linearly structured light beams. The two linearly structured light beams have an intersection line. For example, when the self-walking device walks along the horizontal ground, the intersection line is perpendicular to the horizontal plane, thereby simplifying the step of generating three-dimensional spatial information and improving the calculation efficiency. Optionally, the linearly structured light includes linear infra-red light.

In step S103, historical feature information of a region in which a current position is located is acquired.

The historical feature information and the current feature information have the same type. The historical feature information includes suspension height information of a suspending obstacle and height information of a ground obstacle, both of which are recorded in an electronic map. As the positions of obstacles on a travel route are always changing, e.g., when the sweeping machine is cleaning a room, the positions of people and objects are always changing, feature information of obstacles surrounding the self-walking device on the travel route is also changing. Therefore, the historical feature information also includes the suspension height information of a surrounding suspending obstacle that the self-walking device passes and height information of a surrounding ground obstacle that the self-walking device passes when the self-walking device travels along the current travel route. It can be understood that when walking along the current travel route, the self-walking device continuously supplements feature information of a surrounding suspending obstacle to the feature information recorded in the electronic map, thereby continuously consolidating the feature information.

The current position is a position of the self-walking device after a collision occurs. The historical feature information of a region in which the current position is located is historical feature information of a surrounding obstacle at this position.

In step S104, a travel route is re-planned to avoid the suspending obstacle based on the current feature information, the historical feature information, and preset feature information of a machine body profile.

The feature information of the machine body profile includes size information of the machine body profile or spatial information of the machine body. Take a sweeping machine as an example, as shown in Fig. 2, the size information of the machine body profile includes width information of the machine body in the forwarding direction, height information of the top platform 22 of the sweeping machine, width information of the LDS 21 in the forwarding direction, and height information of the LDS 21 beyond the top platform 22 of the sweeping machine.

In an embodiment of the present disclosure, current feature information and historical feature information which have spatial meanings are analyzed by using the spatial information of the machine body, and a new travel route is re-planned. A travel route suitable for the self-walking device is acquired after evaluation based on the spatial information. Limitations of the travel route planning which solely depends on a distance from the obstacle detected at the same height are avoided, and the route planning effectiveness is improved.

Specifically, the re-planning the travel route based on the current feature information, the historical feature information, and the preset feature information of the machine body profile includes the following steps.

In step S104-1, the newest feature information is generated by updating the historical feature information based on the current feature information.

By updating the historical feature information based on the newly acquired current feature information, integrity of the generated newest feature information is ensured, and data support for re-planning the travel route is provided.

Further, the feature information includes a correspondence relationship between suspension position information and suspension height information.

The suspension position information indicates coordinate information of a detected suspending obstacle in a three-dimensional space. For example, when the linearly structured light assembly of the sweeping machine detects the under-wall of a sofa, coordinate information of the under-wall in the three-dimensional space is the suspension position information. Accordingly, in some application scenes, the height information of the under-wall at the suspending position from the ground is the suspension height information.

Accordingly, the generating the newest feature information by updating the historical feature information based on the current feature information includes the following steps.

In step S104-1-1, historical suspension height information corresponding to the suspension position information is updated based on current suspension height information.

It can be understood that the historical suspension height information corresponding to the suspension position information is updated by the current suspension height information acting as the newest suspension height information.

In a specific embodiment, the historical height information includes historical elevation map information.

The historical elevation map information includes information of multiple adjacent unit regions and historical elevation information corresponding to the information of each unit region. The information of each unit region is associated with the suspension position information, and the information of all the unit regions constitute information of a plane region associated with preset task information.

The preset task information includes a preset instruction task for controlling the self-walking device to finish preset work, e.g., completing the cleaning of a room by the sweeping machine.

Accordingly, the updating historical suspension height information corresponding to the suspension position information based on the current suspension height information includes the following steps.

In step S104-1-1-1, a classification operation is performed based on the information of unit regions to acquire suspension position information of a respective category.

When detecting obstacles, multiple pieces of suspension position information of surrounding obstacles and the corresponding current suspension height information can be acquired. The suspension position information may belong to different unit regions, while some suspension position information belongs to the same unit region. Therefore, the suspension position information is classified in this step, and the suspension position information belonging to the same unit region is classified into the same category.

In step S104-1-1-2, first suspension height information of a respective category is determined based on the current suspension height information corresponding to the suspension position information of each category.

As there is a correspondence relationship between the suspension position information and the current suspension height information, suspension position information of the same category corresponds to the current suspension height information of the same category. In an embodiment of the present disclosure, first suspension height information of the same category is determined by using current suspension height information of this same category.

Specifically, the determining first suspension height information of a respective category based on the current suspension height information corresponding to the suspension position information of each category includes the following step.

In step S104-1-1-2a, first suspension height information of a respective category with the minimum value is acquired based on the current suspension height information corresponding to suspension position information of each category.

That is, the minimum height value is selected as the first suspension height information from the current suspension height information of each category.

In step S104-1-1-3, the historical suspension height information for the information of unit regions of a respective category is updated based on the first suspension height information of each category.

Adopting the minimum height value means adopting the minimum suspension height, so that the collision probability is eliminated to the largest extent.

In step S104-2, a travel route is re-planned based on the newest feature information and the size information.

In an embodiment of the present disclosure, the newest feature information with a spatial meaning is analyzed by using the spatial information of the machine body, and a new travel route is re-planned. A travel route suitable for the self-walking device is acquired after evaluation based on the spatial information. Limitations of the travel route planning which solely depends on a distance from the obstacle detected at the same height are avoided, and the route planning effectiveness is improved.

Optionally, the method further includes the following step after acquiring the current feature information of the surrounding obstacle:

step S 110: marking current feature information of a detected suspending obstacle.

The current feature information of the suspending obstacle can be marked for reference for the next travel route planning to realize automatic obstacle avoidance. For example, the sweeping machine sends the current feature information of an under-wall of a sofa to a cloud-end server or a local server, or such position is saved in the memory of the sweeping machine, so that the suspending obstacle formed by the under-wall of the sofa can be automatically avoided next time.

### Embodiment 2

The present disclosure also provides an apparatus embodiment consistent with the above embodiment for realizing the steps of the method in the above embodiment. Interpretations of the names in the present embodiment are the same as interpretations of the names having the same meanings in the above embodiment, and the same technical effects as that in the above embodiment can be achieved, which will not be repeated herein.

As shown in Fig. 4, the present disclosure provides an obstacle avoidance apparatus 400 of a self-walking device, including:
a signal acquisition unit 401, configured to acquire a collision signal at a top of a self-walking device when the self-walking device walks along a current travel route;
a response unit 402, configured to acquire current feature information of a surrounding obstacle in response to the collision signal, the current feature information including suspension height information of a suspending obstacle over the top of the self-walking device;
a feature acquisition unit 403, configured to acquire historical feature information of a region in which a current position is located; and
a planning unit 404, configured to re-plan a travel route to avoid the suspending obstacle based on the current feature information, the historical feature information, and preset feature information of a machine body profile.

Optionally, the response unit 402 includes:
a response sub-unit, configured to acquire the current feature information of the surrounding obstacle by a structured light assembly arranged on the self-walking device.

Optionally, the feature information of the machine body profile includes size information of the machine body profile; and
the planning unit 404 includes:
a generation sub-unit, configured to generate the newest feature information by updating the historical feature information based on the current feature information; and
a planning sub-unit, configured to re-plan the travel route based on the newest feature information and the size information.

Optionally, the feature information includes a correspondence relationship between suspension position information and suspension height information; and
the generation sub-unit includes:
a first updating sub-unit, configured to update historical suspension height information corresponding to the suspension position information based on current suspension height information.

Optionally, the historical height information includes historical elevation map information;
the historical elevation map information includes information of multiple adjacent unit regions and historical elevation information corresponding to the information of each unit region, where the information of each unit region is associated with the suspension position information, and the information of all the unit regions constitute information of a plane region associated with preset task information; and
the first updating sub-unit includes:
   a position acquisition sub-unit, configured to perform a classification operation based on the information of unit regions to acquire suspension position information of a respective category;
   a first height acquisition sub-unit, configured to determine first suspension height information of the respective category based on current suspension height information corresponding to suspension position information of each category; and
   a second updating sub-unit, configured to update the historical suspension height information for the information of unit regions of the respective category based on the first suspension height information of each category.

Optionally, the height acquisition sub-unit includes:
a second height acquisition sub-unit, configured to acquire first suspension height information of the respective category with the minimum value based on the current suspension height information corresponding to suspension position information of each category.

Optionally, the apparatus further includes:
a marking unit, configured to mark current feature information of a detected suspending obstacle after acquiring the current feature information of the surrounding obstacle.

In an embodiment of the present disclosure, current feature information and historical feature information which have spatial meanings are analyzed by using the spatial information of the machine body, and a new travel route is re-planned. A travel route suitable for the self-walking device is acquired after evaluation based on the spatial information. Limitations of the travel route planning which solely depends on a distance from the obstacle detected at the same height are avoided, and the route planning effectiveness is improved.

### Embodiment 3

An embodiment of the present disclosure provides an electronic device which includes one or more processors and a memory in a communication connection with the one or more processors. The memory stores instructions executable by the one or more processors. When the instructions are executed by the one or more processors, the steps of the methods in any one of the above embodiments can be performed by the one or more processors.

### Embodiment 4

An embodiment of the present disclosure provides a non-volatile computer storage medium storing computer-executable instructions which can execute the steps of the methods in any one of the above embodiments.

### Embodiment 5

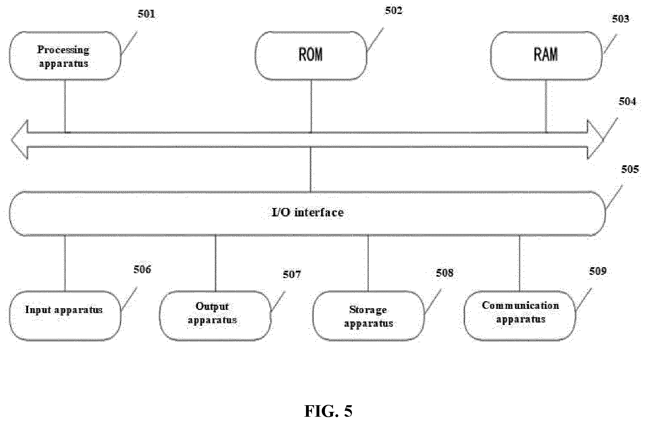

Refer to Fig. 5, which shows a schematic diagram of an electronic device according to an embodiment of the present disclosure. The electronic device in an embodiment of the present disclosure may include, but is not limited to, a mobile terminal, such as a mobile phone, a notebook computer, a digital broadcast receiver, a personal digital assistant (PDA), a tablet computer (PAD), a portable multimedia player (PMP), an onboard terminal (such as an onboard navigation terminal), and a fixed terminal, such as a digital TV and a desktop computer. The electronic device shown in Fig. 5 is only an example, and should not limit the function and application range of the embodiments of the present disclosure.

As shown in Fig. 5, the electronic device may include a processing apparatus (such as a central processing unit, a graphics processing unit, or the like) 501 that may perform various appropriate actions and processing according to a program stored in a read-only memory (ROM) 502 or a program loaded from a storage apparatus 508 into a random-access memory (RAM) 503. In the RAM 503, various programs and data required for operation of the electronic device are further stored. The processing apparatus 501, the ROM 502, and the RAM 503 are connected to each other by a bus 504. An input/output (I/O) interface 505 is also connected to the bus 504.

Generally, the following apparatuses may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a loudspeaker, and a vibrator; a storage apparatus 1408 including, for example, a tape or a hard disk; and a communication apparatus 509. The communication apparatus 509 may allow the electronic device to communicate with another device in a wireless or wired way to exchange data. Although FIG. 5 shows an electronic device with various apparatuses, it should be understood that it is not required to implement or provide all the shown apparatuses. Alternatively, more or fewer apparatuses may be implemented or provided.

In particular, according to the embodiments of the present disclosure, the process described above with reference to the flowchart may be implemented as a computer software program. For example, an embodiment of the present disclosure includes a computer program product that includes a computer program carried on a non-transitory computer readable medium, and the computer program includes program codes used to perform the method shown in the flowchart. In such an embodiment, the computer program may be downloaded and installed from a network by using the communication apparatus 509, installed from the storage apparatus 508, or installed from the ROM 502. When the computer program is executed by the processing apparatus 501, the foregoing functions defined in the method according to the embodiments of the present disclosure are executed.

It should be noted that the foregoing computer-readable medium in the present disclosure may be a computer-readable signal medium, a computer-readable storage medium, or any combination of the foregoing two. The computer-readable storage medium may be, for example, an electrical, magnetic, optical, electromagnetic, infrared, or semiconductor system, apparatus, or device, or any combination thereof. More specific examples of the computer-readable storage medium may include, but are not limited to: an electrical connection having one or more conductive wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus, or device. In the present disclosure, the computer-readable signal medium may include a data signal propagated in a baseband or as a part of a carrier, which carries computer-readable program codes. Such a propagated data signal may be in multiple forms, including, but not limited to, an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or device. The program code included on the computer-readable medium may be transmitted by using any suitable medium, including, but not limited to: a conductive wire, an optical cable, a radio frequency (RF), or any suitable combination thereof.

In some embodiments, the client and the server may communicate by using any currently known or future-developed network protocol, for example, a Hyper Text Transfer Protocol (HTTP), and can be interconnected with a communication network of any form or any medium. Examples of the communication network include a local area network (LAN), a wide area network (WAN), an internet network (for example, the Internet), and an end-to-end network (for example, an ad hoc end-to-end network), and any currently known or future-developed network.

The computer readable medium may be included in the foregoing electronic device, or may exist separately and not assembled into the electronic device.

Computer program codes for performing the operations of the present disclosure may be written in one or more programming languages or a combination thereof, such as object-oriented programming languages like Java, Smalltalk, C++, and conventional procedural programming languages like "C" or similar program design languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

Flowcharts and block diagrams in the accompanying drawings illustrate possible architectures, functions, and operations of systems, methods, and computer program products according to various embodiments of the present disclosure. In this regard, each block in a flowchart or block diagram may represent a module, program segment, or part of code that includes one or more executable instructions for implementing a specified logical function. It should also be noted that in some alternative implementations, functions marked in the block may also occur in different orders than those marked in the accompanying drawings. For example, two blocks represented in succession may actually be executed in substantially parallel, and they may sometimes be executed in a reverse order, depending on the functions involved. It should also be noted that each block in the block diagram and/or flowchart, and a combination of blocks in the block diagram and/or flowchart may be implemented by using a dedicated hardware-based system that performs a specified function or operation, or may be implemented by using a combination of dedicated hardware and a computer instruction.

The units described in embodiments of the present disclosure may be implemented either by means of software or by means of hardware. The names of these units do not limit the units themselves under certain circumstances.

Various functions described herein above may be implemented by one or more hardware logic members. For example and without limitations thereto, an exemplary hardware logic member includes a field programmable gate array (FPGA), an application-specific integrated circuit (ASIC), an application-specific standard product (ASSP), a system-on-chip system (SOC), a complex programmable logic device (CPLD), or the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. Machine-readable media may include, but are not limited to, electronic, magnetic, optical, electromagnetic, infrared, or semiconductor systems, apparatuses, or devices, or any suitable combination of the foregoing. More specific examples of the machine-readable storage media would include one or more wire-based electrical connections, portable computer disks, hard disks, random-access memories (RAMs), read-only memories (ROMs), erasable programmable read-only memories (EPROM or flash memories), fiber optics, portable compact disk read only memories (CD-ROMs), optical storage devices, magnetic storage devices, or any suitable combination of the foregoing.

The units described in embodiments of the present disclosure may be implemented either by means of software or by means of hardware. The names of these units do not limit the units themselves under certain circumstances.

## Claims

1. An obstacle avoidance method for a self-walking device, comprising:
acquiring a collision signal at a top of a self-walking device when the self-walking device walks along a current travel route;
acquiring current feature information of a surrounding obstacle in response to the collision signal, the current feature information comprising suspension height information of a suspending obstacle over the top of the self-walking device;
acquiring historical feature information of a region in which a current position is located; and
re-planning a travel route to avoid the suspending obstacle based on the current feature information, the historical feature information, and preset feature information of a machine body profile.

2. The method of claim 1, wherein the acquiring the current feature information of the surrounding obstacle comprises:
acquiring the current feature information of the surrounding obstacle by a structured light assembly arranged on the self-walking device.

3. The method of claim 1, wherein
the feature information of the machine body profile comprises size information of the machine body profile; and
the re-planning the travel route based on the current feature information, the historical feature information, and the preset feature information of the machine body profile comprises:
generating the newest feature information by updating the historical feature information based on the current feature information; and
re-planning the travel route based on the newest feature information and the size information.

4. The method of claim 3,wherein
the feature information comprises a correspondence relationship between suspension position information and suspension height information; and
the generating the newest feature information by updating the historical feature information based on the current feature information comprises:
updating historical suspension height information corresponding to the suspension position information based on current suspension height information.

5. The method of claim 4, wherein
the historical height information comprises historical elevation map information;
the historical elevation map information comprises information of multiple adjacent unit regions and historical elevation information corresponding to the information of each unit region, wherein the information of each unit region is associated with the suspension position information, and the information of all the unit regions constitute information of a plane region associated with preset task information; and
the updating the historical suspension height information corresponding to the suspension position information based on the current suspension height information comprises:
performing a classification operation based on the information of unit regions to acquire the suspension position information of a respective category;
determining first suspension height information of the respective category based on the current suspension height information corresponding to the suspension position information of each category; and
updating the historical suspension height information for the information of unit regions of the respective category based on the first suspension height information of each category.

6. The method of claim 5, wherein the determining the first suspension height information of the respective category based on the current suspension height information corresponding to the suspension position information of each category comprises:
acquiring first suspension height information of the respective category with the minimum value based on the current suspension height information corresponding to the suspension position information of each category.

7. The method of claim 1, further comprising:
after acquiring the current feature information of the surrounding obstacle, marking the current feature information of a detected suspending obstacle.

8. An obstacle avoidance apparatus for a self-walking device, comprising:
a signal acquisition unit, configured to acquire a collision signal at a top of a self-walking device when the self-walking device walks along a current travel route;
a response unit, configured to acquire current feature information of a surrounding obstacle in response to the collision signal, the current feature information comprising suspension height information of a suspending obstacle over the top of the self-walking device;
a feature acquisition unit, configured to acquire historical feature information of a region in which a current position is located; and
a planning unit, configured to re-plan a travel route to avoid the suspending obstacle based on the current feature information, the historical feature information, and preset feature information of a machine body profile.

9. The apparatus of claim 8, wherein the response unit comprises:
a response sub-unit, configured to acquire the current feature information of the surrounding obstacle by a structured light assembly arranged on the self-walking device.

10. The apparatus of claim 8, wherein
the feature information of the machine body profile comprises size information of the machine body profile; and
the planning unit comprises:
a generation sub-unit, configured to generate the newest feature information by updating the historical feature information based on the current feature information; and
a planning sub-unit, configured to re-plan the travel route based on the newest feature information and the size information.

11. The apparatus of claim 10, wherein
the feature information comprises a correspondence relationship between suspension position information and suspension height information; and
the generation sub-unit comprises: a first updating sub-unit, configured to update historical suspension height information corresponding to the suspension position information based on current suspension height information.

12. The apparatus of claim 11, wherein
the historical height information comprises historical elevation map information;
the historical elevation map information comprises information of multiple adjacent unit regions and historical elevation information corresponding to the information of each unit region, wherein the information of each unit region is associated with the suspension position information, and the information of all the unit regions constitute information of a plane region associated with preset task information; and
the first updating sub-unit comprises:
a position acquisition sub-unit, configured to perform a classification operation based on the information of unit regions to acquire the suspension position information of a respective category;
a first height acquisition sub-unit, configured to determine first suspension height information of the respective category based on the current suspension height information corresponding to the suspension position information of each category; and
a second updating sub-unit, configured to update the historical suspension height information for the information of unit regions of the respective category based on the first suspension height information of each category.

13. The apparatus of claim 12, wherein
the height acquisition sub-unit comprises: a second height acquisition sub-unit, configured to acquire first suspension height information of the respective category with the minimum value based on the current suspension height information corresponding to the suspension position information of each category.

14. The apparatus of claim 8, further comprising:
a marking unit, configured to mark current feature information of a detected suspending obstacle after acquiring the current feature information of the surrounding obstacle.

15. A computer-readable storage medium storing a computer program thereon, wherein, when the computer program is executed by a processor, the method of any of claims 1 to 7 is accomplished.

16. An electronic device, comprising:
one or more processors; and
a storage apparatus, configured to store one or more programs, wherein, when the one or more programs is/are executed by the one or more processors, the method of any of claims 1 to 7 is accomplished.
